(19) Europäisches Patentamt
European Patent Office
Office européen des brevets

(11) **EP 3 620 841 A1**

(12) **EUROPEAN PATENT APPLICATION**

(43) Date of publication:
**11.03.2020 Bulletin 2020/11**

(51) Int Cl.:
**G02B 21/16** (2006.01)   **G01N 21/64** (2006.01)
**G02B 21/36** (2006.01)

(21) Application number: **18193103.1**

(22) Date of filing: **07.09.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ETH Zurich**
**8092 Zurich (CH)**

(72) Inventors:
- **GRANGE, Rachel**
  **2800 Delémont (CH)**
- **TIMOFEEVA, Mariia**
  **8304 Wallisellen (CH)**
- **LANG, Lukas**
  **9491 Ruggell (LI)**
- **RENAUT, Claude**
  **8051 Zürich (CH)**

(54) **AUTOMATED SYSTEM FOR WIDE-FIELD MULTIPHOTON MICROSCOPE**

(57)    A method of investigating a sample using a wide-field multiphoton microscope with tunable excitation wavelength ($\lambda$) is disclosed. The sample is illuminated at some excitation wavelength. Images of the sample are acquired at wavelengths different from the excitation wavelength, e.g., at half the excitation wavelength for SHG microscopy, using an image sensor. Based on the obtained images, an autoalignment procedure is carried out for optimizing the position of the sample relative to the illumination and/or collection beam paths. An image or spectrum that has been obtained for the optimal relative position is stored. The procedure is repeated for multiple excitation wavelengths. The autoalignment procedure can comprise an autofocusing subprocedure to automatically optimize the position of the sample relative to a focal plane of at least one objective of the multiphoton microscope along a direction that is perpendicular to the focal plane, and an in-plane repositioning subprocedure for automatically optimizing the position of the sample within the focal plane.

FIG. 7

EP 3 620 841 A1

## Description

TECHNICAL FIELD

The present invention relates to a method of investigating a sample using a wide-field multiphoton microscope with tunable excitation wavelength. The present invention further relates to a wide-field multiphoton microscope that is configured to carry out such a method.

PRIOR ART

The term "multiphoton microscopy" refers to a class of microscopy techniques that make use of nonlinear optical effects in the investigated material. Multiphoton microscopy includes techniques such as higher-harmonic generation microscopy, which includes second-harmonic generation (SHG) microscopy and third-harmonic generation (THG) microscopy, and multiphoton fluorescence microscopy, in particular, two-photon-excited fluorescence (TPEF) microscopy.

The term "wide-field multiphoton microscopy" refers to a class of multiphoton microscopy techniques wherein a comparatively large area of a sample is illuminated and imaged without the need for scanning. Images are obtained as single frames from a 2D image sensor such as a CCD sensor. The field of view for the illumination beam can have linear dimensions on the scale of 100 $\mu$m. In the present disclosure, the term "wide-field multiphoton microscopy" is understood as being synonymous with the term "non-scanning multiphoton microscopy".

A SHG microscope obtains contrast from variations in the ability of a material to generate second-harmonic light from the incident light. SHG requires intense laser light passing through a material that has break of inversion symmetry in its structure and generally strongly depends on the polarization of the incident laser light. Second-harmonic light emerging from an SHG material is exactly half the wavelength of the light that enters the material. In contrast to TPEF, SHG is energy conserving.

SHG microscopy can be used for studying material properties such as crystal structure, local orientation, optoelectronic properties, and defects, cracks and corrosion. This makes SHG microscopy a powerful tool for nondestructive characterization of materials, interfaces and crystal structure.

Warren R. Zipfel, Rebecca M. Williams, and Watt W. Webb, "Nonlinear magic: multiphoton microscopy in the biosciences", Nature Biotechnology Vol. 21 No. 11 (2003), 1369-1377, DOI 10.1038/nbt899 discusses multiphoton microscopy with a focus on applications in biology. R. Grange et al., "Far-Field Imaging for Direct Visualization of Light Interferences in GaAs Nanowires", Nano Lett. 2012, 12, 5412-5417, DOI 10.1021/nl302896n and M. Timofeeva et al., "Polar Second-Harmonic Imaging to Resolve Pure and Mixed Crystal Phases along GaAs Nanowires", Nano Lett. 2016, 16, 6290-6297, DOI 10.1021/acs.nanolett.6b02592 disclose examples of applications of SHG microscopy to materials science.

The nonlinear signal response in multiphoton microscopy is generally orders of magnitude weaker than the excitation signal and strongly depends on the intensity of the light field. It is therefore not only important that the optical elements used for collecting light for imaging the sample are well aligned and focused, but also that the optical elements for illuminating the sample with the excitation laser beam are well aligned and focused. To add to complexity, the wavelengths of the excitation laser beam and of the collected light used for imaging are not the same in multiphoton microscopy. In typical multiphoton microscopes the excitation light is in the near infrared and infrared region of the spectrum, whereas observation takes place around the visible range of the spectrum. Due to inevitable chromatic aberrations of the optical elements in the collection beam path, it is not possible to focus the collection beam path using the excitation light, as in ordinary optical microscopy.

Typically, tunable pulsed laser sources are used for multiphoton microscopy. In TPEF microscopy, the laser source is normally tuned to a fixed wavelength, which often corresponds to the maximum of the two-photon excitation cross section of the fluorescent dye used for marking the sample. In contrast, in particular in SHG microscopy it may be desirable to tune the laser source to different excitation wavelengths or even perform a wavelength sweep across a wide range of excitation wavelengths to gain additional information through the wavelength dependence of the SHG signals. Acquisition of images for different excitation wavelengths, however, is hampered by the inevitable chromatic aberrations of the optical elements both in the excitation and collection beam paths.

SUMMARY OF THE INVENTION

It is an object of the present invention to provide a method of wide-field multiphoton microscopy that enables the acquisition of images and/or spectra of a sample at different excitation wavelengths while ensuring high intensity and quality of the acquired images or spectra. This object is achieved by a method according to claim 1.

The present invention provides an automated method of investigating a sample using a wide-field multiphoton microscope with tunable excitation wavelength, the method comprising:

(a) operating a light source of the multiphoton microscope to create excitation light at an excitation wavelength;

(b) focusing the excitation light to a focal region in or on the sample, using an illumination system of the multiphoton microscope, the illumination system defining an illumination beam path;

(c) collecting light from the focal region, using a collection system of the multiphoton microscope, the collection system defining a collection beam path, the collection system comprising a wavelength separator to suppress light at the excitation wavelength;

(d) directing collected light that has passed the wavelength separator to an image sensor so as to obtain images of the sample;

(e) based on the obtained images, carrying out an autoalignment procedure for optimizing the position of the sample relative to the illumination and/or collection beam paths;

(f) storing an image and/or spectrum obtained from the sample in the optimized relative position; and

(g) repeating steps (a) to (f) for a plurality of excitation wavelengths.

The term "wavelength separator" is to be understood to relate to any optical element that allows light at one or more selected detection wavelengths to pass the optical element while rejecting light at the excitation wavelength. For instance, the wavelength separator may comprise a filter, prism, grating or dichroic element. In particular, the wavelength separator preferably allows light at approximately half the excitation wavelength to pass the wavelength separator while rejecting light at the excitation wavelength. The wavelength separator ensures that the images obtained by the image sensor are images at the detection wavelength(s) rather than images at the excitation wavelength.

The autoalignment procedure of step (e) can comprise at least one, preferably both of the following subprocedures:

(e1) an autofocusing subprocedure for automatically optimizing the position of the sample relative to a focal plane of at least one objective of the multiphoton microscope along a direction that is perpendicular to the focal plane; and

(e2) an in-plane repositioning subprocedure for automatically optimizing the position of the sample within the focal plane.

The proposed method enables the acquisition of images and/or spectra from the sample, using a wide-field multiphoton microscope, across a wide range of wavelengths while ensuring that all images or spectra are acquired in an optimized position of the sample relative to the optical components of the multiphoton microscope, thus ensuring high intensity and quality of the acquired images or spectra despite chromatic aberrations in the optical components of the excitation and detection beam paths and even in the presence of movements of the sample relative to the optical components. Such movements may, e.g., be due to vibrations of the multiphoton microscope, or they may be due to gravity, particularly if the focal plane is a vertical plane in the laboratory frame.

Advantageously, not only is autoalignment applied at each excitation wavelength, but also the output power of the light source is determined at each excitation wavelength so as to enable control of the output power and/or normalization of the results with respect to output power. This is of particular value for multiphoton microscopy and spectroscopy because the multiphoton signal strongly depends on the intensity of the excitation light.

The excitation wavelength may be changed systematically in a stepwise manner across an excitation wavelength range ("wavelength sweep"). By carrying out the autoalignment procedure after each wavelength change within the sweep, the method of the present invention ensures that the multiphoton microscope remains properly focused and that the sample remains properly aligned throughout the entire wavelength sweep. In this connection, it should be noted that a wavelength sweep can require significant amounts of time, typically in the range of one to several hours, and that therefore movements of the sample relative to the optical components often cannot be neglected.

Each of the autofocusing subprocedure (e1) and the in-plane repositioning subprocedure (e2) can be carried out by optimizing (e.g., maximizing or minimizing) a focus score that is calculated from the obtained images of the sample. The same algorithm or different algorithms for calculating the focus score may be used for the autofocusing subprocedure (e1) and for the in-plane repositioning subprocedure (e2). Preferably, in each case the focus score is an intensity measure derived from the images obtained from the image sensor. The intensity measure can be, e.g., a (possibly weighted) sum over the intensities (or squared intensities or any other power of intensities) of all pixels or of selected pixels of the image sensor. However, the focus score can be calculated by any other known algorithm for calculating focus scores, including derivative-based, statistical, intuitive or histogram-based algorithms as disclosed, for example, in Yu Sun et al., "Autofocusing in Computer Microscopy: Selecting the Optimal Focus Algorithm", Microscopy Research and Technique 65:139-149 (2004), DOI 10.1002/jemt.20118.

In order to increase the speed of the proposed method without compromising the quality of the autoalignment procedure, the autoalignment procedure can comprise a coarse alignment subprocedure followed by a fine alignment subprocedure. Such a pair of subprocedures may be employed for each axis (direction of change) along which the relative position of the sample and optical components of the multiphoton microscope is to be optimized.

The coarse alignment subprocedure can comprise:

obtaining images of the sample, using the image sensor, while stepwise changing a relative position between the sample and at least one objective of the multiphoton microscope along a direction of change;
calculating a focus score from each image; and
determining a range of relative positions along the direction of change where the focus score is near an optimum.

The coarse alignment subprocedure can further comprise:

determining an indicator whether the direction of change of the relative position should be reversed, and
if the indicator indicates that the direction of change should be reversed, reversing the direction of change.

In order to decrease the likelihood of finding a local optimum of the focus score that is not the global optimum, the coarse alignment subprocedure can further comprise computing running averages of focus scores for different relative positions. Determination of the range of relative positions can then be based on the running averages.

The fine alignment subprocedure can comprise systematically scanning the range of relative positions that was determined by the coarse alignment subprocedure. The range can be scanned stepwise along the direction of change in steps that are smaller than the steps used for the coarse alignment subprocedure. The final step size may be as small as the smallest step size supported by the translation stages that carry the sample and/or the objectives.

The algorithms for determining the focus score that are employed for the coarse focusing subprocedure and for the fine focusing subprocedure can be the same, or they can be different. In particular, it is preferred if the focus score algorithm used for fine focusing has a dependence of focus score on sample position which exhibits a marked maximum at a well-defined position. The focus score algorithm used for coarse focusing advantageously has a dependence on sample position in which the focus score approaches a maximum slowly and steadily from both sides. Here, the maximum may be broad and even exhibit a plateau.

The present invention further provides a wide-field multiphoton microscope, comprising:

a tunable light source for generating light at an excitation wavelength;
an illumination system for focusing light from the light source to a focal region on or in a sample, the illumination system defining an illumination beam path;
a collection system for collecting light from the focal region, the collection system defining a collection beam path, the collection system comprising a wavelength separator to suppress light at the excitation wavelength; and
an image sensor for obtaining images from the light that has passed the wavelength separator,
wherein the multiphoton microscope further comprises a positioning system for changing a position of the sample relative to the illumination and/or collection beam paths, and a controller configured to carry out the method as defined above, using the positioning system.

In some embodiments, the illumination system can comprise an illumination objective, the collection system can comprise a collection objective, and the multiphoton microscope can comprise a first translation stage for moving the illumination objective along the illumination beam path and a second translation stage for moving the collection objective along the collection beam path. In particular, the multiphoton microscope can be configured to operate in transmission mode, and the optical axes of the illumination and collection objectives can coincide in this case. In other embodiments, the illumination and collection objectives can be arranged in an angled configuration. In particular, the optical axes of the objectives can be arranged at an angle of more than 90° and less than 180°, and the multiphoton microscope can accordingly be configured to operate in "angled" reflection mode. Regardless of configuration, the autoalignment procedure can comprise operating at least one of the first and second translation stages to change an optical distance between the sample and the illumination and/or collection objectives along the illumination and/or collection beam paths. In particular, the autoalignment procedure can comprise operating at least one of the first and second translation stages to change an optical distance between the illumination and collection objectives, followed by operating both the first and second translation stages in a coordinated manner to change a position of the illumination and collection objectives relative to the sample while keeping the optical distance between these objectives fixed.

In other embodiments, the multiphoton microscope can be configured to be operated in "straight" reflection mode. The illumination system and the collection system will then comprise a common objective that acts both as the illumination and collection objective, and the multiphoton microscope can comprise a translation stage for moving the common objective along a beam path portion that is common to the illumination and collection beam paths. The autoalignment procedure can then comprise operating the translation stage to change a distance between the sample and the common objective along the common beam path portion.

Throughout the present specification, the term "objective" is to be understood broadly as referring to any optical element or combination of optical elements that is capable of focusing light to a focal region. An objective can consist of a single lens, or it can comprise multiple lenses.

The multiphoton microscope can comprise a sample holder mounted on a pair of translation stages for moving the sample holder along two mutually orthogonal transverse directions that are transverse to the illumination and detection beam paths. The autoalignment procedure can then comprise operating the pair of translation stages so as to move the sample holder relative to the illumination and collection beam paths along the transverse directions. Preferably the transverse directions are parallel to the focal plane of at least one objective of the multiphoton microscope, in particular, parallel to the focal plane of the collection objective (in transmission mode or "angled" reflection mode) or of the common objective (in "straight" reflection mode).

In configurations with separate illumination and collection objectives, it is preferred that the illumination objective has a smaller magnification than the collection objective so as to perform wide-field excitation. The magnification of the illumination objective is preferably smaller than the magnification of the collections objective by at least a factor of 5.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1     shows, in a highly schematic manner, a multiphoton microscope setup for operation in transmission mode;
Fig. 2     shows, in a highly schematic manner, a multiphoton microscope setup for operation in "angled" reflection mode;
Fig. 3     shows, in a highly schematic manner, a multiphoton microscope setup for operation in "straight" reflection mode;
Fig. 4     shows, in a highly schematic manner, a multiphoton microscope setup that can be operated both in transmission and "straight" reflection mode;
Fig. 5     shows, in a perspective view, an exemplary embodiment of mechanical components that can be used for autoalignment;
Fig. 6     shows a diagram that relates focal distance to wavelength;
Fig. 7     shows a flowchart illustrating a method of analyzing a sample according to an embodiment of the invention;
Fig. 8     shows a flowchart illustrating a two-step autoalignment procedure according to an embodiment of the present invention;
Fig. 9     shows a flowchart illustrating the coarse-alignment subprocedure in the autofocusing procedure of Fig. 8;
Fig. 10    shows a highly schematic diagram that visualizes aspects of the coarse-alignment subprocedure of Fig. 9;
Fig. 11    shows a highly schematic diagram that visualizes the effect of averaging within the coarse-alignment subprocedure of Fig. 9;
Fig. 12    shows a flowchart illustrating the fine-alignment subprocedure in the autoalignment procedure of Fig. 8;
Fig. 13    shows a highly schematic diagram that visualizes the fine-alignment subprocedure of Fig. 12; and
Fig. 14    shows a highly schematic diagram that illustrates the dependence of different focus score algorithms on sample position.

DESCRIPTION OF PREFERRED EMBODIMENTS

Exemplary setups for wide-field multiphoton microscopy

(i) Transmission mode

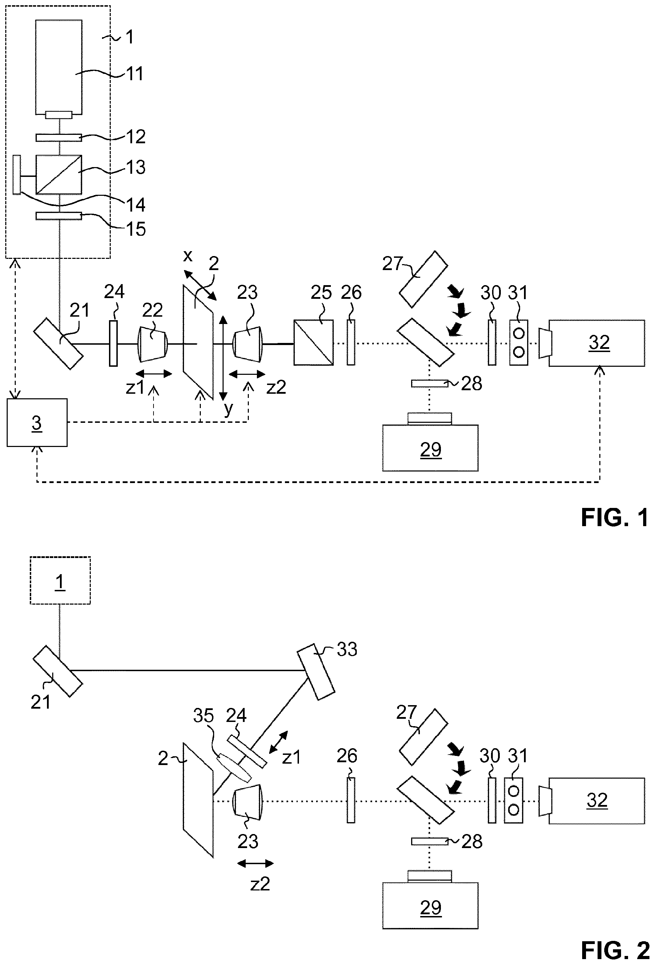

Fig. 1 shows, in a highly schematic manner, an exemplary setup for wide-field multiphoton microscopy for operation in transmission mode. The setup includes a light source 1 comprising a tunable pulsed laser 11 for generating an excitation light beam. In exemplary embodiments, the laser 11 is a tunable, mode-locked femtosecond laser, e.g., a tunable Ti:Sapphire laser. The laser 11 may have a broad tuning range. For instance, the tuning range may range from 690 nm to 1200 nm. Light from the laser 11 passes through a first half-wave plate 12 that is mounted on an automated rotation stage, followed by a polarizing optical element in the form of a beam splitter 13. Light from one output of the beam splitter 13 is directed to an optional power meter 14. Light from the other output of the beam splitter 13 passes through a second half-wave plate 15, which is also mounted on an automated rotation stage in order to adjust the polarization of the laser light. Instead of power meter 14, a power meter 24 can be provided so as to measure power of the light beam after the second half-wave plate 15. Power meter 24 can be flipped into the beam path of the excitation light beam (the "illumination beam path") for measuring power, and can be flipped out of the illumination beam path when the light is to be passed to the sample. By changing the orientation of first half-wave plate 12, the output power of light source 1 can controlled. Preferably, power is controlled so as to keep the output power as measured by power meter 14 or 24 constant. In summary, light source 1 has tunable wavelength, variable polarization and controllable power.

Light from light source 1 is reflected by a mirror 21 and enters an illumination objective 22 that is mounted on an automated translation stage allowing the position of the illumination objective 22 to be changed along the illumination beam path. The optical axis of illumination objective 22 extends along the z1 axis, which in the present example is a horizontal axis.

A sample 2 is mounted on automated translation stages allowing the position of sample 2 to be changed along two mutually orthogonal directions perpendicular to the z1 axis, denoted the x and y axes. Illumination objective 22 focuses the excitation light to a focal region on or in sample 2.

Light originating from the focal region is collected by a collection objective 23, which is also placed on an automated translation stage allowing the position of collection objective 23 to be changed along an axis designated the z2 axis. In the present embodiment, the z1 and z2 axes coincide.

It is preferred that illumination objective 22 has a lower magnification than collection objective 23 to perform wide-field excitation, thus allowing the investigation of the sample without scanning. For instance, illumination objective 22 may have a magnification of 10X, whereas collection objective 23 may have a magnification of 100X. Of course other combinations if magnifications are possible.

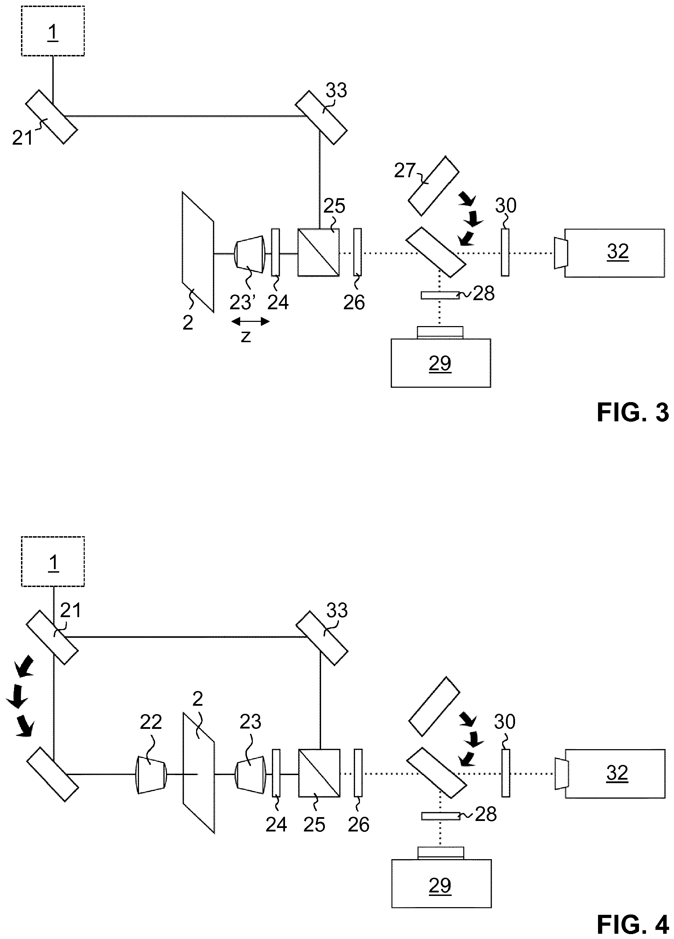

Collection objective 23 is followed by an optional beam splitter 25, whose function will become apparent from the discussion of Fig. 4, and a polarizer 26 that is mounted on an automated rotation stage. A mirror 27 can be flipped into the beam to direct the light through a filter 28 to a spectrometer 29. When the mirror 27 is not flipped into the beam, the light will pass through a focusing lens 30 and a filter wheel 31 into a camera 32. The camera comprises an image sensor, e.g., a CCD sensor, comprising a 2D matrix of a plurality of photosensitive pixels. The focusing lens 30 focuses the light to the image plane of said image sensor.

In order to selectively observe light at desired detection wavelengths (e.g., SHG light at half the excitation wavelength), filter wheel 31 is set such that only light at the desired detection wavelengths passes through filter wheel 31, while light at other wavelengths (in particular, light at the excitation wavelength) is rejected. In more general terms, filter wheel 31 may be considered an example of a wavelength separator for separating light at the excitation wavelength from light at the detection wavelengths. Instead of filter wheel 31, for instance a prism or grating may be used for suppressing light at the excitation wavelength.

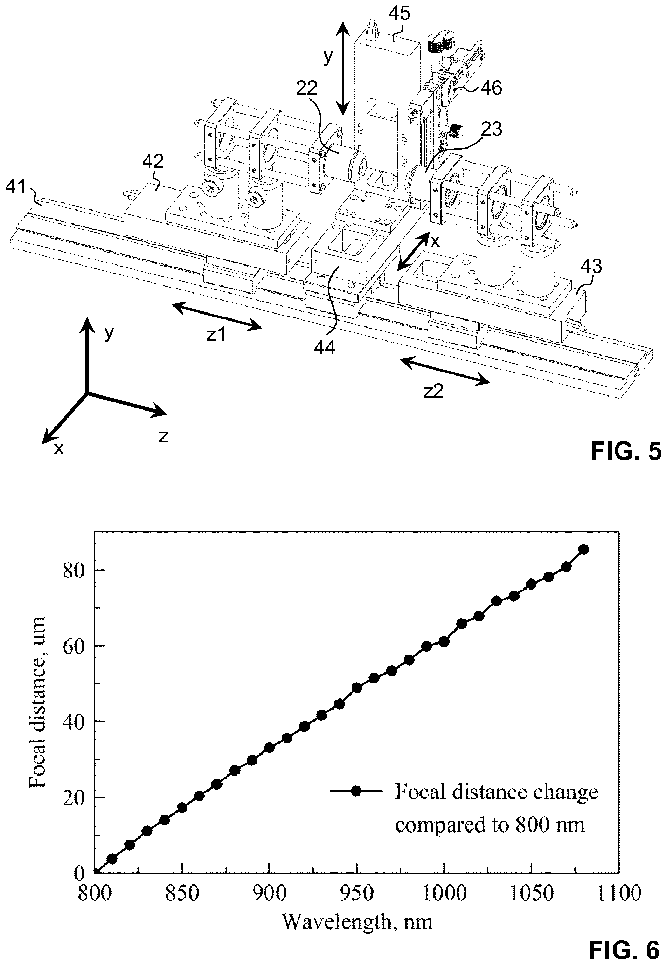

A controller 3 receives data from power meters 14 and/or 24, camera 32 and any other detectors that might be present. Controller 3 carries out all necessary control tasks. For instance, in one aspect, controller 3 controls wavelength, output power and polarization of light source 1. In another aspect, controller 3 controls the acquisition of images by camera 32. In yet another aspect, controller 3 receives image data from camera 32, calculates a focus score from the acquired images, and carries out an autoalignment procedure based on the focus score, as will be described in more detail below in conjunction with Figures 6 to 14.

*(ii) "Angled" reflection mode*

Fig. 2 shows, in a highly schematic manner, an exemplary setup for wide-field multiphoton microscopy for operation in "angled" reflection mode. Parts having the same function as in the embodiment of Fig. 1 carry the same reference numerals as in Fig. 1. The same light source 1 as in Fig. 1 is employed, and the light source is therefore not depicted in any detail. Light from light source 1 is directed by mirrors 21, 33 to a focusing lens 35. Focusing lens 35 acts as an illumination objective just like objective 22 of the first embodiment. Instead of or in addition to lens 35, a multi-lens objective can be used. Again, power meter 24 can be flipped into and out of the illumination beam path. The sample is illuminated along the z1 axis, which is now arranged at an angle of approximately 135° relative to the z2 axis defined by the optical axis of collection objective 23. The collection beam path is essentially the same as in Fig. 1, with the exception that beam splitter 25 is omitted.

*(iii) "Straight" reflection mode*

Fig. 3 shows, in a highly schematic manner, an exemplary setup for wide-field multiphoton microscopy for operation in "straight" reflection mode. Parts having the same function as in the embodiments of Figs. 1 and 2 carry the same reference numerals as in Figs. 1 and 2. In the embodiment of Fig. 3, the light that is reflected from mirror 33 enters a beam splitter 25, from where it is directed through objective 23' at sample 2. In this embodiment, there is only a single objective 23', which acts both as an illumination objective for exciting the sample and as a collection objective for collecting light from the sample. The single objective can be moved along the z axis. As in the previously described embodiments, power meter 24 can be flipped into and out of the illumination beam path.

*(iv) Combining transmission and reflection mode*

Fig. 4 illustrates, in a highly schematic manner, how the embodiments of Figs. 1 and 3 can be combined into a single setup, which is capable of being operated either in transmission mode or in "straight" reflection mode. Parts having the same function as in the embodiment of Figs. 1-3 carry the same reference numerals as in Figs. 1-3. In this embodiment, mirror 21 can be shifted from a first position to a second position. In the first position, mirror 21 directs the laser light to mirror 33, as in Fig. 3, causing the microscope to operate in "straight" reflection mode. In the second position, mirror 21 directs the laser light to illumination objective 22, as in Fig. 1, causing the microscope to operate in transmission mode.

Exemplary embodiment of mechanical setup

Fig. 5 illustrates a possible mechanical setup for carrying out autoalignment in a wide-field multiphoton microscopy setup as in Figures 1, 3 or 4. Rail 41 carries an automated first translation stage 42, enabling precise translations along the z1 direction. First translation stage 42 carries illumination objective 22. Rail 41 further carries an automated second translation stage 43, which enables precise translations along the z2 direction (here coinciding with the z1 direction). Second translation stage 43 carries collection objective 23. In this manner, the z positions of illumination objective 22 and collection objective 23 can be precisely adjusted with sub-micrometer resolution. Rail 41 further carries, at a fixed z position between the first and second translation stages 42, 43, an automated third translation stage 44, enabling precise translations along the x direction perpendicular to the z direction. On the third translation stage 44, an automated fourth translation stage 45 is mounted, enabling precise translations along the y direction, perpendicular to the z and x directions. A sample holder 46 is mounted on the fourth translation stage 45. In this manner, the sample holder 46 can be precisely shifted along the x and y directions with sub-micrometer resolution while remaining at a fixed z position.

Focus score

In the present disclosure, image-based methods are employed for autoalignment in a wide-field multiphoton microscope. Such methods use actual image data acquired by the image sensor and calculate a quantitative figure of merit, called the focus score, from the image data. Autoalignment is achieved by optimizing (e.g. maximizing or minimizing) the focus score while changing the relative position of the sample and the optical elements used for focusing.

Preferably, the focus score is an intensity measure, for instance a (possibly weighted) sum over the intensities (or squared intensities or any other power of intensities) of all pixels or of selected pixels of the image sensor. However, the focus score can be calculated by any other known algorithm for calculating focus scores, including derivative-based, statistical, intuitive or histogram-based algorithms as disclosed, for example, in Yu Sun et al., "Autofocusing in Computer Microscopy: Selecting the Optimal Focus Algorithm", Microscopy Research and Technique 65:139-149 (2004), DOI 10.1002/jemt.20118. These algorithms include:

- Variance (Groen et al., 1985; Yeo et al., 1993), Statistical Algorithm:

$$F_{var} = \sum_{height} \sum_{width} [i(x, y) - \mu]^2$$

where $i(x,y)$ is pixel intensity at position $(x,y)$ and $\mu$ is the mean pixel intensity.

- Brenner Gradient (Brenner et al., 1971), Derivative-Based Algorithm:

$$F_{Brenner} = \sum_{height} \sum_{width} [i(x + 2, y) - i(x, y)]^2$$

where a threshold $\theta$ can be set to improve the efficiency: $[i(x + 2,y) - i(x,y)]^2 > \theta$, acting like a high-pass filter. The focused images are the ones with bigger pixel intensity differences.

- Image Power (Santos et al., 1997), Intuitive Algorithm:

$$F_{power} = \sum_{height} \sum_{width} i(x,y)^2$$

where the threshold is $i(x,y)^2 > \theta$.

- Maximum Pixel Intensity, Intuitive Algorithm:

$$F_{max} = \max(i(x,y))$$

- Edge Filter plus Variance, combining Derivative-Based and Statistical Algorithms. The edge filter reveals high pixel intensity changes. It acts similarly to the derivative method as it compares pixel intensity differences, but it returns an image, enabling the application of another algorithm to it.

Some algorithms for determining a focus score require the calculation of a threshold. In order to be able to calculate such a threshold, a reference score is needed, which may for instance correspond to the maximum intensity to be expected in a single pixel. In order to determine the reference score, it may be necessary to carry out a quick, coarse scan of the search range, taking images for a plurality of sample positions relative to the optical components of the microscope, and compute the highest single-pixel score from each image. This may be done at the beginning of the autoalignment subprocedure.

Considerations concerning wavelength tuning

Fig. 6 illustrates the change of focal length of a typical objective in the course of a wavelength sweep from 800 to 1060 nm. On the abscissa, the change of focal distance with respect to the focal distance at an excitation wavelength of 800 nm is shown as a function of excitation wavelength. When the excitation wavelength is swept from 800 nm to 1060 nm, the focal distance will change by about 80 $\mu$m, which is much more than the size of a typical focus spot or of a typical structure to be investigated. This clearly illustrates the importance of autofocusing when the wavelength is changed or even swept through an extended range. In addition, it may be desirable to also optimize the position of the sample within the focal plane for each excitation wavelength.

Embodiment of proposed method

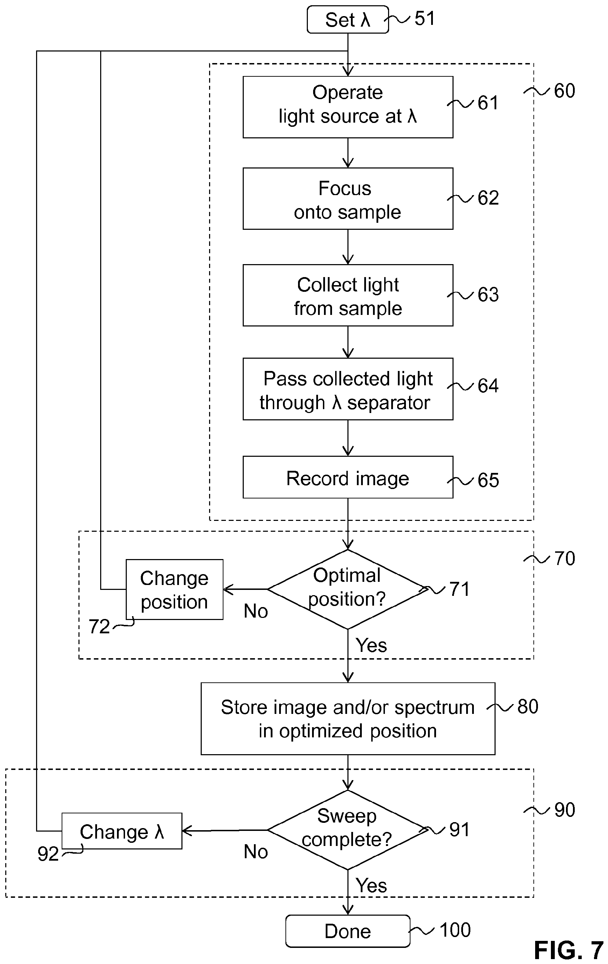

Figure 7 is a flowchart of a method of investigating a sample using a wide-field multiphoton microscope according to an embodiment of the present invention. The method can be employed with any multiphoton microscopy setup, including the setups illustrated in Figs. 1-4. As will be described in more detail below, this method includes an automatic realignment procedure each time the wavelength is changed, thereby ensuring that the multiphoton microscope permanently remains in focus, and that the sample region of interest permanently remains within the focal region of the illumination and/or collection objective(s) of the multiphoton microscope.

The method starts with setting an initial excitation wavelength $\lambda$ in step 51.

An image acquisition procedure 60 is carried out at excitation wavelength $\lambda$. The image acquisition procedure comprises the following steps: In step 61, excitation light at excitation wavelength $\lambda$ is created by operating the light source at this wavelength. In step 62, the light is focused to a focal region on or in the sample using the optical components of the illumination beam path, in particular, the illumination objective. In step 63, light from the focal region is collected, using the optical components of the collection beam path, in particular, the collection objective (which in "straight" reflection mode may be identical with the illumination objective). In step 64, the collected light passes through a wavelength separator that suppresses light at the excitation wavelength while allowing light having different wavelengths, in particular, approximately half the excitation wavelength, to pass the wavelength separator. In step 65, the light that has passed the wavelength separator is directed to the image sensor, and an image of the sample is obtained by the image sensor.

Image acquisition procedure 60 is followed by autoalignment procedure 70. In the autoalignment procedure, the images obtained in the image acquisition procedure 60 are analyzed, and based on this analysis it is determined in step 71 whether the position of the sample relative to the optical components in the illumination and collection beam paths is optimal. In particular, it is determined whether the illumination and/or collection objectives are properly focused to a region of interest of the sample (i.e., whether the focal plane of the objective(s) contains the region of interest), and whether the region of interest is properly aligned to the illumination and collection beam paths within the focal plane. If this is not the case, the relative position of the sample and at least one of the objectives is changed in step 72, and the image acquisition procedure 60 is repeated until proper alignment has been achieved. To this end, a focus score is computed for each relative position of sample and objective(s), and the focus score is optimized (e.g., maximized or minimized, depending on the type of focus score) by changing the relative position of the sample and the objective(s).

In step 80, an image obtained in the optimized position is stored, or a spectrum is obtained in this position and stored.

This sequence of events is repeated as often as possible until a wavelength sweep across a desired wavelength range has been completed. To this end, wavelength sweep procedure 90 includes a step 91 of determining whether the wavelength sweep has been completed. If not, the excitation wavelength $\lambda$ is changed in step 92, and procedures 60 to 80 are repeated until the wavelength sweep has been completed. The method then ends at step 100.

Additional considerations concerning autoalignment

*(i) Autofocusing in transmission and angled reflection mode*

If two separate objectives are used for illumination and collection, both the illumination objective 22 and the collection objective 23 should be properly focused onto the sample region of interest. Different strategies can be pursued to achieve this goal. In one strategy, first the optical distance between the illumination and collection objectives is optimized so as to cause the focal planes of both objectives to coincide, and only thereafter the position of the sample along the z2 axis is optimized while keeping the optical distance between the objectives fixed. This sequence can be repeated as often as necessary until the focal planes of the objectives coincide and the sample region of interest is properly positioned within the focal plane. However, other strategies are conceivable, for instance, strategies wherein the position of each objective relative to the sample along the illumination and collection beam paths is optimized separately.

*(ii) Autofocusing in "straight" reflection mode*

In "straight" reflection mode (as in Fig. 3), only a single objective 23 is used both for illumination and collection. Therefore only a single parameter (the z distance between the single objective and the sample) needs to be optimized during autofocusing. Since the focal length of the single objective 23 will generally be different at the excitation wavelength and at the detection wavelength, autofocusing will necessarily result in a compromise between correct focusing of the excitation beam path and correct focusing of the collection beam path. The result may heavily depend on the algorithm that is used for determining the focus score. It may be advantageous to choose an algorithm for the focus score which will result in the excitation beam path to be slightly defocused, while the collection beam path is in focus, because this will result in the best resolution of the collected images, however, at the cost of brightness due to defocusing of the excitation light.

*(iii) Optimization of in-plane position*

Further to autofocusing, the position of the sample within the focal plane should be optimized. The same or different algorithms for calculating a focus score may be employed for autofocusing and for in-plane positioning.

*(iv) Coarse/fine alignment subprocedures*

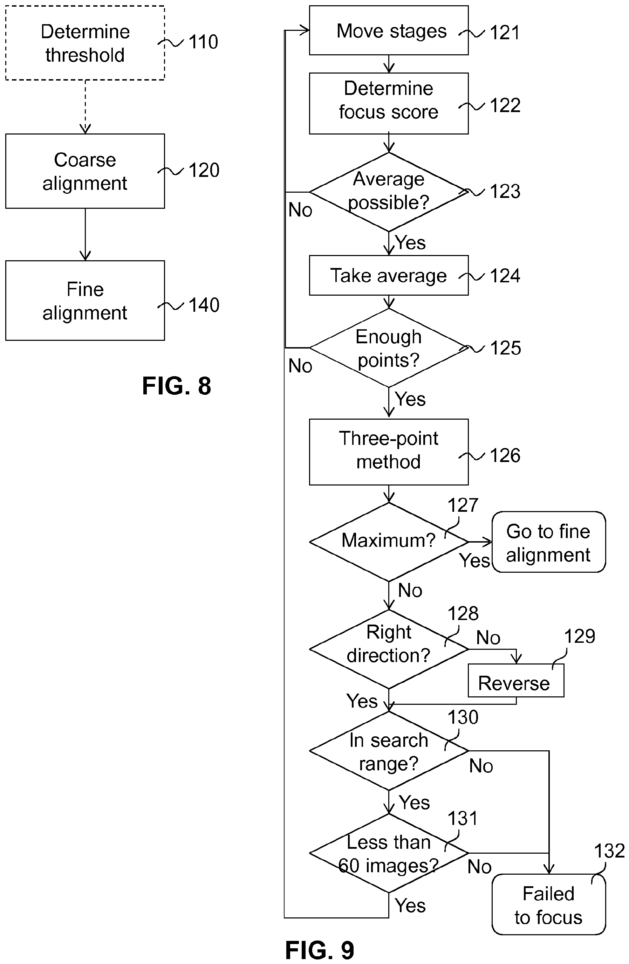

In order to speed up autoalignment without compromising on the result of autoalignment, for each alignment axis the autoalignment procedure may be split into two subprocedures. This is schematically illustrated in the flowchart of Fig. 8. Here, the autoalignment procedure comprises a coarse alignment subprocedure 120 and a fine alignment subprocedure 140. As explained above, some focus score algorithms require the determination of a threshold. If necessary, this is preferably done before the coarse alignment subprocedure, as indicated by dashed box 110.

The coarse alignment subprocedure can use the so-called three-point method for determining the slope and curvature of a focus score as a function of the relative position of the sample and the objective(s) along a particular direction and for determining whether the focus score has reached a maximum.

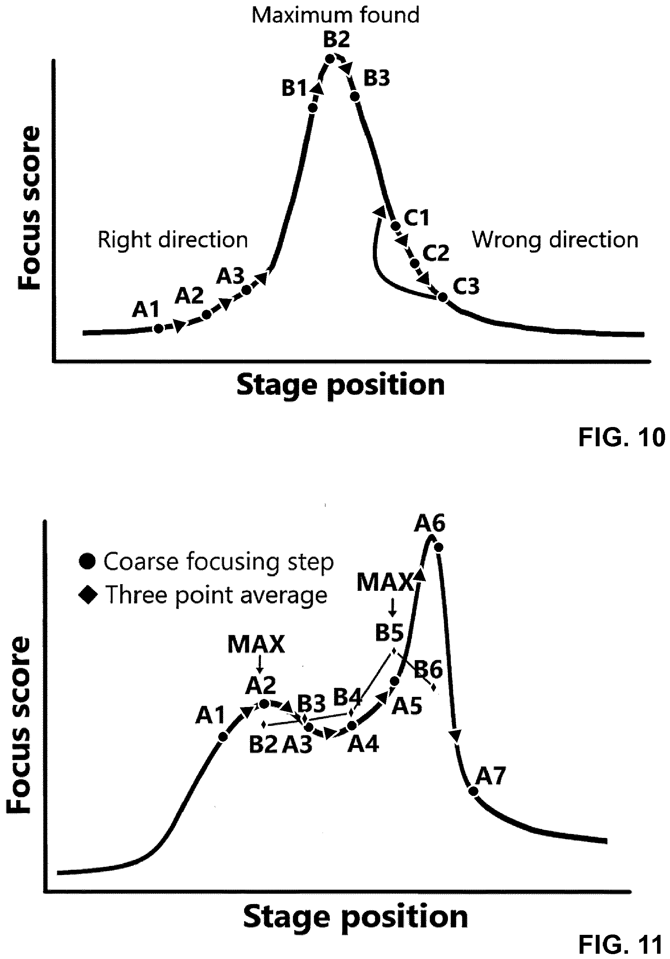

The three-point method is illustrated in Fig. 10. Figure 10 shows a somewhat idealized dependence of a focus score on sample position ("stage position" in Fig. 10). In the three-point method, three focus scores at three successive z positions separated by equal steps are compared. If the second focus score is higher than the first and third focus scores, it is concluded that a maximum has been reached. In Figure 10, this is the case for data points B1, B2, B3. If the three focus scores continuously decrease, it is concluded that the direction of movement of the objectives should be reversed. In Fig. 10, this is the case for data points C1, C2, C3. If, on the other hand, the three focus scores continuously increase, as for data points A1, A2, A3 in Fig. 10, the method is simply continued by moving the objective(s) to the next z position, acquiring a further focus score and repeating the three-point method with the two preceding data points A2, A3 and the most recently acquired data point.

Once the maximum has been found, a range of relative positions around the maximum is defined, and the fine alignment subprocedure is carried out only in this range of positions. In the present example, the range of positions between B1 and B3 would be employed for the fine alignment subprocedure.

In order to reduce the likelihood that the three-point method converges to a local optimum that is not the global optimum, a running average of the focus scores for at least two, preferably at least three successive relative positions is determined, and the three-point method is applied to the running averages. This amounts to a kind of low-pass filtering of the focus score with respect to position before applying the three-point method.

The effect of this kind of averaging is illustrated in Fig. 11. Raw data points A1 to A7 are obtained from directly measured focus scores. In the situation of Fig. 11, using the directly measured focus scores might lead to a false selection of the range from raw data points A1 to A3 as being the region of interest for the subsequent fine focusing subprocedure.

Averaged data points B2 to B6 are obtained from calculating arithmetic averages of three successive raw data points each. For instance, averaged data point B2 is an average of raw data points A1, A2 and A3. Likewise, averaged data point B3 is an average of raw data points A2, A3 and A4, and so forth. The dependence of averaged data points B2 to B6 on position is much "slower" than for raw data points A1 to A7. The averaged data points only exhibit a single maximum, which is close to the correct maximum of the focus score curve.

The coarse alignment subprocedure is illustrated in the form of a flow chart in Fig. 9. Since the averaging procedure and the three-point method require a plurality of focus scores at different relative positions, the coarse focusing subprocedure starts with the acquisition of images at different relative positions and the calculation of focus scores from these images. In particular, the coarse focusing subprocedure starts with a step 121 of moving the translation stages to some relative position, followed by a step 122 of acquiring an image and determining the focus score for this image at this position. It is then checked in step 123 whether there is already a sufficient number of data points (values of the focus score at different positions) in order to carry out averaging. If not, the procedure is repeated at step 121 for the next position. If there are enough data points for averaging, the average is calculated in step 124 It is then checked in step 125 whether there are enough average values in order to carry out the three-point method. If not, the method again continues with step 121 for the next position. If there are enough average values, the method proceeds to step 126, where the three-point method is applied to the three most recent average values. In step 127, it is checked whether the three-point method indicates that a maximum has been reached. If yes, the coarse focusing subprocedure ends and will be followed by the fine focusing subprocedure. If no, it will next be checked in step 128 whether the three-point method indicates that the translation stages move in the correct direction. If not, the direction of movement is reversed in step 129. It is then checked in step 130 whether the z position is still within a predefined search range. If not, it is concluded that the autofocusing procedure has failed (step 132). Otherwise, it will be checked in step 131 whether less than the defined maximum of images has been recorded (here: 60 images). If this maximum has been exceeded, it is again concluded that the autofocusing procedure has failed. If this maximum has not yet been reached, the method continues with step 121 at the next relative position.

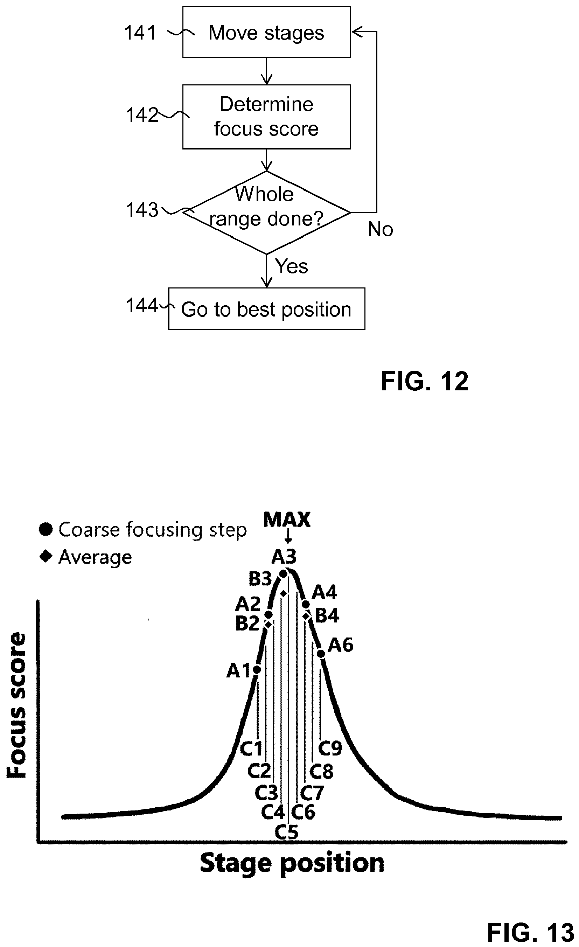

The fine alignment subprocedure is schematically illustrated in Fig. 12. In this subprocedure, images are taken and analyzed for different relative positions separated by narrow steps throughout the range of relative positions near the focus score optimum that has been defined by the coarse alignment subprocedure.

In the fine alignment subprocedure, in step 141, the translation stages are set to a relative position within the range determined by the coarse alignment subprocedure. In step 142, an image is taken, and the corresponding focus score is determined. In step 143, it is checked whether the whole range has already been evaluated. If not, the next position is evaluated. Once the whole range has been evaluated, it is determined which relative position has achieved the highest focus score, and the translation stages are moved to that relative position (step 144). This ends the autoalignment procedure for this axis.

The fine alignment subprocedure is diagrammatically illustrated in Fig. 13. Raw data points A1 to A5 result from direct measurements of focus scores during the coarse alignment subprocedure. Averaged data points B2 to B4 are the result of averaging. Data point B3 indicates the maximum of the averaged data points. The five associated raw data points are A1 to A5. The range between these raw data points indicates the range of the fine focusing subprocedure. During the fine focusing subprocedure, a focus score is determined for many (here nine) different relative positions within this range, resulting in data points C1 to C9.

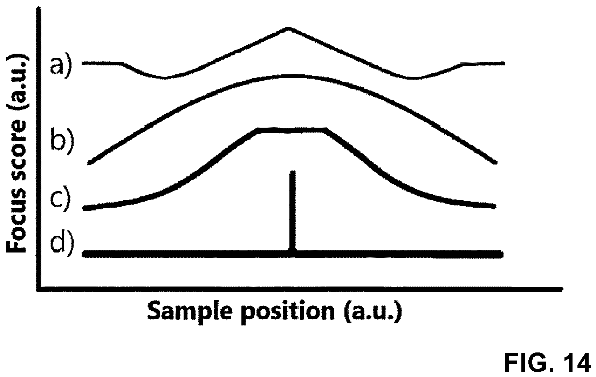

Each known focus score algorithm has a particular dependence on relative position. Fig. 14 illustrates some examples of such dependencies. For the coarse alignment subprocedure, algorithms where the focus score curve looks like b) and c) are best adapted, whereas a curve like a) has a restricted search range and one like d) is not suited at all. For the fine alignment subprocedure, the algorithms where the focus score curve looks like a) and b) are best adapted, whereas a curve like c) has a large uncertainty concerning the best focused position and one like d) is improbable. The maximum does not need to be sharp, but it is important that the global maximum corresponds to the position where one would manually focus. This illustrates that it might be advantageous to employ different focus score algorithms during the coarse alignment subprocedure and during the fine alignment subprocedure.

Although the invention has been described with reference to particular embodiments, this description is not meant to be construed in a limiting sense, and various modifications and alternative embodiments are possible. For instance, while in the above-described embodiments a half-wave plate together with a polarizing beam splitter is used for controlling power of the excitation light, any other means for controlling power may be employed, as it is well known in the art. Instead of filter wheel 31, any other wavelength separator may be used. If no spectral information is desired, mirror 27, filter 28 and spectrometer 29 can be omitted. Instead of camera 32, any other type of digital image sensor that is capable of recording 2D images in the desired wavelength range can be used, and instead of lens 30, any other means of focusing light onto the image sensor can be employed. In embodiments without power control, power meters 14, 24 can be omitted. The invention is not limited to the particular setups of Figures 1 to 4. For instance, if only operation in transmission mode is required, mirror 21 can be omitted in Fig. 1, and light source 1 can be arranged on the same optical axis as objectives 22 and 23. In the embodiment of Fig. 2, mirrors 21 and 33 can be omitted, and the light source can be arranged on the same optical axis as lens 35. In the embodiment of Fig. 3, mirrors 21 and 33 can likewise be omitted, and the light source 1 can be arranged to directly shine into beam splitter 25. Many mechanical setups for moving a sample holder and at least one objective other than that of Fig. 5 are conceivable. In particular, it is conceivable to move the sample not only along the x and y directions, but also along the z direction. Many other variations are possible without leaving the scope of the present invention.

**Claims**

1. A method of investigating a sample (2) using a wide-field multiphoton microscope with tunable excitation wavelength, the method comprising:

   (a) operating a light source (1) of the multiphoton microscope to create excitation light at an excitation wavelength ($\lambda$);
   (b) focusing the excitation light to a focal region in or on the sample (2), using an illumination system of the multiphoton microscope, the illumination system defining an illumination beam path;
   (c) collecting light from the focal region, using a collection system of the multiphoton microscope, the collection system defining a collection beam path, the collection system comprising a wavelength separator (31) to suppress light at the excitation wavelength ($\lambda$);
   (d) directing collected light that has passed the wavelength separator (31) to an image sensor (32);
   (e) based on the obtained images, carrying out an autoalignment procedure (70) for optimizing a position of the sample relative to the illumination and/or collection beam paths;
   (f) storing an image and/or spectrum obtained from the sample (2) in the optimized relative position; and
   (g) repeating steps (a) to (f) for a plurality of excitation wavelengths ($\lambda$).

2. The method of claim 1, wherein the autoalignment procedure of step (e) comprises at least one of the following subprocedures:

   (e1) an autofocusing subprocedure for automatically optimizing the position of the sample relative to a focal plane of at least one objective (22, 23) of the multiphoton microscope along a direction (z1, z2) that is perpendicular to the focal plane; and
   (e2) an in-plane repositioning subprocedure for automatically optimizing the position of the sample within the focal plane.

3. The method of claim 1 or 2, wherein the excitation wavelength ($\lambda$) is changed systematically in a stepwise manner across an excitation wavelength range.

4. The method of any one of the preceding claims, wherein the autoalignment procedure comprises optimizing a focus score that is calculated from the obtained images of the sample, the focus score preferably being an intensity measure.

5. The method of any one of the preceding claims, wherein the autoalignment procedure comprises a coarse alignment subprocedure (120) followed by a fine alignment subprocedure (140).

6. The method of claim 5, wherein coarse alignment subprocedure (120) comprises:

   obtaining images of the sample, using the image sensor, while stepwise changing a relative position between the sample and the illumination and/or collection beam paths along a direction of change;
calculating a focus score from each image; and
determining a range of relative positions along the direction of change where the focus score is near an optimum.

7. The method of claim 5 or 6, wherein the coarse alignment subprocedure (120) comprises:

determining an indicator whether the direction of change of the relative position should be reversed, and
if the indicator indicates that the direction of change should be reversed, reversing the direction of change.

8. The method of any one of claims 5-7, wherein the coarse focusing subprocedure (120) comprises computing running averages of focus scores for different relative positions, and wherein the range of relative positions is determined based on the running averages.

9. The method of any one of claims 5-8, wherein the fine alignment subprocedure (140) comprises systematically scanning the range of relative positions that was determined by the coarse alignment subprocedure (120) in steps that are smaller than the during the coarse alignment subprocedure.

10. The method of any one of the preceding claims,

wherein the illumination system comprises an illumination objective (22),
wherein the collection system comprises a collection objective (23), and
wherein the multiphoton microscope comprises a first translation stage (42) for moving the illumination objective (22) along the illumination beam path (z1) and a second translation stage (43) for moving the collection objective (23) along the collection beam path (z2), and
wherein the autoalignment procedure comprises operating at least one of the first and second translation stages (42, 43) to change a distance between the sample (2) and the illumination and/or collection objectives (22, 23).

11. The method of any one of claims 1-9,

wherein the illumination system and the collection system comprise a common objective (23'),
wherein the multiphoton microscope comprises a translation stage (42) for moving the common objective (23') along a beam path portion that is common to the illumination and collection beam paths, and
wherein the autoalignment procedure comprises operating the translation stage (42) to change a distance between the sample (2) and the common objective (23') along the common beam path portion.

12. The method of any one of the preceding claims,

wherein the multiphoton microscope comprises a sample holder (46) mounted on a pair of translation stages (44, 45) for moving the sample holder along two mutually orthogonal transverse directions (x, y) that are transverse to the illumination and detection beam paths,
and wherein the autoalignment procedure comprises operating the pair of translation stages (44, 45) so as to move the sample holder (46) relative to the illumination and collection beam paths along the transverse directions (x, y).

13. A wide-field multiphoton microscope, comprising:

a tunable light source (1) for generating light at an excitation wavelength;
an illumination system for focusing light from the light source (1) to a focal region on or in a sample (2), the illumination system defining an illumination beam path;
a collection system for collecting light from the focal region, the collection system defining a collection beam path, the collection system comprising a wavelength separator (31) to suppress light at the excitation wavelength; and
an image sensor (32) for obtaining images from the light that has passed the wavelength separator (31),
**characterized in that** the multiphoton microscope further comprises a positioning system (42, 43, 44, 45) for changing a position of the sample (2) relative to the illumination and/or collection beam paths, and a controller (3) configured to carry out the method of any one of the preceding claims using the positioning system (42, 43, 44, 45).

**14.** The wide-field multiphoton microscope of claim 13, wherein the illumination system comprises an illumination objective (22) having a first magnification, wherein the collection system comprises a collection objective (23) having a second magnification, and wherein the second magnification is larger than the first magnification.

**FIG. 1**

**FIG. 2**

**FIG. 3**

**FIG. 4**

**FIG. 5**

**FIG. 6**

FIG. 7

Determine threshold ~ 110

Coarse alignment ~ 120

Fine alignment ~ 140

**FIG. 8**

Move stages ~ 121

Determine focus score ~ 122

Average possible? ~ 123
No
Yes

Take average ~ 124

Enough points? ~ 125
No
Yes

Three-point method ~ 126

Maximum? 127
Yes — Go to fine alignment
No

Right direction? 128
No — Reverse 129
Yes

In search range? 130
No
Yes

Less than 60 images? 131
No — Failed to focus 132
Yes

**FIG. 9**

FIG. 10

FIG. 11

**FIG. 12**

**FIG. 13**

**FIG. 14**

Europäisches
Patentamt

European
Patent Office

Office européen
des brevets

# EUROPEAN SEARCH REPORT

Application Number

EP 18 19 3103

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2018/149847 A1 (LYTLE STEVEN [US] ET AL) 31 May 2018 (2018-05-31) * paragraphs [0035] - [0064]; figures 1-10 * | 1-14 | INV. G02B21/16 G01N21/64 G02B21/36 |
| Y | CN 106 404 723 A (UNIV SHENZHEN) 15 February 2017 (2017-02-15) * the whole document * | 1-14 | |
| A | US 2015/029325 A1 (DHOLAKIA KISHAN [GB] ET AL) 29 January 2015 (2015-01-29) * paragraphs [0001] - [0051]; figures 1-5 * | 1,10,14 | |
| A | US 2017/370844 A1 (MATSUMOTO NAOYA [JP] ET AL) 28 December 2017 (2017-12-28) * paragraphs [0031] - [0074]; figures 1-7 * | 1,13 | |

TECHNICAL FIELDS
SEARCHED (IPC)

G02B
G01N

The present search report has been drawn up for all claims

| Place of search | Date of completion of the search | Examiner |
|---|---|---|
| Munich | 21 February 2019 | Wolf, Steffen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.............................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 3103

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2019

| Patent document cited in search report | | Publication date | Patent family member(s) | | Publication date |
|---|---|---|---|---|---|
| US 2018149847 | A1 | 31-05-2018 | CN<br>EP<br>JP<br>US<br>WO | 107690596 A<br>3304164 A1<br>2018522267 A<br>2018149847 A1<br>2016195925 A1 | 13-02-2018<br>11-04-2018<br>09-08-2018<br>31-05-2018<br>08-12-2016 |
| CN 106404723 | A | 15-02-2017 | NONE | | |
| US 2015029325 | A1 | 29-01-2015 | CA<br>CN<br>EP<br>JP<br>JP<br>US<br>WO | 2869359 A1<br>104204898 A<br>2834695 A1<br>6166776 B2<br>2015514235 A<br>2015029325 A1<br>2013150273 A1 | 10-10-2013<br>10-12-2014<br>11-02-2015<br>19-07-2017<br>18-05-2015<br>29-01-2015<br>10-10-2013 |
| US 2017370844 | A1 | 28-12-2017 | CN<br>EP<br>JP<br>US<br>WO | 107209359 A<br>3249440 A1<br>2016133636 A<br>2017370844 A1<br>2016117408 A1 | 26-09-2017<br>29-11-2017<br>25-07-2016<br>28-12-2017<br>28-07-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WARREN R. ZIPFEL ; REBECCA M. WILLIAMS ; WATT W. WEBB.** Nonlinear magic: multiphoton microscopy in the biosciences. *Nature Biotechnology,* 2003, vol. 21 (11), 1369-1377
- **R. GRANGE et al.** Far-Field Imaging for Direct Visualization of Light Interferences in GaAs Nanowires. *Nano Lett.,* 2012, vol. 12, 5412-5417
- **M. TIMOFEEVA et al.** Polar Second-Harmonic Imaging to Resolve Pure and Mixed Crystal Phases along GaAs Nanowires. *Nano Lett.,* 2016, vol. 16, 6290-6297
- **YU SUN et al.** Autofocusing in Computer Microscopy: Selecting the Optimal Focus Algorithm. *Microscopy Research and Technique,* 2004, vol. 65, 139-149